# EUROPEAN PATENT SPECIFICATION

(11) **EP 3 804 415 B1**
(45) Date of publication and mention of the grant of the patent: **21.09.2022**
(21) Application number: 18740541.0
(22) Date of filing: 06.07.2018
(51) Int. Cl.: H04W 52/02, H04B 7/0413

(54) **A NETWORK NODE AND A USER NODE FOR IMPROVING RELIABILITY OF WAKE-UP SIGNALING IN A WIRELESS COMMUNICATION NETWORK, AND CORRESPONDING METHODS THEREFOR**
NETZWERKKNOTEN UND BENUTZERKNOTEN ZUR VERBESSERUNG DER ZUVERLÄSSIGKEIT EINER AUFWECKSIGNALISIERUNG IN EINEM DRAHTLOSEN KOMMUNIKATIONSNETZWERK UND ENTSPRECHENDE VERFAHREN DAFÜR
NOEUD DE RÉSEAU ET NOEUD UTILISATEUR POUR AMÉLIORER LA FIABILITÉ D'UNE SIGNALISATION DE RÉVEIL DANS UN RÉSEAU DE COMMUNICATIONS SANS FIL, ET PROCÉDÉS CORRESPONDANTS

(43) Date of publication of application: 14.04.2021
(73) Proprietor: Huawei Technologies Oy (Finland) Co. Ltd., 00620 Helsinki (FI)
(72) Inventor: PUCHKO, Oleksandr, 16440 Kista (SE); HEISKA, Kari, 16440 Kista (SE); KELA, Petteri, 16440 Kista (SE); ROSTAMI, Soheil, 16440 Kista (SE)
(74) Representative: MERH-IP Matias Erny Reichl Hoffmann Patentanwälte PartG mbB
(86) International application number: PCT/EP2018/068372
(87) International publication number: WO 2020/007485

(56) References cited:
- US-A1- 2010 214 969
- US-A1- 2014 126 442
- US-A1- 2017 094 064

## Description

### TECHNICAL FIELD

The present disclosure relates to the field of wireless communications, and more particularly to a network node and a user node both so configured as to enhance power consumption of the user node, as well as to corresponding methods for operating the user and network nodes.

### BACKGROUND

As the number of different communication services requiring user nodes to be connected to a wireless communication network is growing up from day to day, power consumption caused by using the communication services in the user nodes is increasing as well. For this reason, user node manufacturers always give much attention to seeking for solutions allowing the power consumption to be reduced.

One of such solutions is a connected-mode Discontinuous Reception (c-DRX) mechanism used in the Long-Term Evolution (LTE), according to which power saving in a user node is achieved by switching on a baseband unit (BBU) of the user node periodically in accordance with a so-called DRX cycle pre-configured by a network node serving the user node. During each DRX cycle, the user node fully wakes up and causes the BBU to process a communication channel between the user node and the network node in order to receive and/or transmit necessary data relating to one or more of the communication services. However, there can be a situation occurring when using the c-DRX mechanism, in which the user node turns on the BBU at the beginning of the DRX cycle, as required by this mechanism, there is no data to be received and/or transmitted. In this situation, the user node unnecessarily consumes battery power for no reason.

To reduce the occurrence of such situations, a concept of wake-up signaling has been introduced, especially, for the 5G New Radio standard imposing more strict requirements for end-to-end latencies. In this concept, the network node periodically sends a wake-up signal (WUS) to the user node before each subsequent DRX cycle, with the wake-up signal indicating whether there is data to be received and/or transmitted during the subsequent DRX cycle. Thus, the user node just needs to consume battery power to receive and decode the WUS, and based on the decoded WUS, the user node can decide whether to turn on the BBU. Thus, the power consumption for no reason is significantly reduced by using the wake-up signaling.

However, there are still problems with the wake-up signaling thus used, namely a WUS misdetection and false alarm In the former case, the WUS is decoded by the user node incorrectly, for example, as the one instructing the user node to turn on the BBU, though the opposite is actually implied by the WUS sent by the network node. In the latter case, the user node wrongly identifies the decoded WUS, for example, as a turning-on signal instead of a sleeping signal.

Therefore, there is still a need for a new solution allowing the power consumption to be reduced more significantly, and to mitigate or even eliminate the above-listed drawbacks.

US 2010/214969 A1 discloses a base station for use in a WiMAX system comprising means for sending a wake-up signal to an idle terminal to indicate to the terminal that a paging signal is about to be sent to the terminal. The terminal receives and interprets the wake-up signal and prepares itself for receiving the paging signal.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object of the present disclosure to provide a solution for improving the reliability of the wake-up signalling, and thereby reducing the power consumption of user nodes.

The object above is achieved by the features of the independent claims in the appended claims. Further embodiments and examples are apparent from the dependent claims, the detailed description and the accompanying drawings.

According to an aspect of the invention, a network node is provided. The network node is configured to generate a sequence of at least two wake-up signal instances for a user node. The network node is then configured to transmit the sequence of at least two wake-up signal instances to the user node by a using burst transmission. This provides improved reliability of the wake-up signaling, thereby leading to reduced power consumption of the user node. Further, the network node is configured to transmit the sequence of at least two wake-up signal instances by using a frequency hopping pattern defining a frequency channel from an available set of frequency channels for each of the wake-up signal instances. This enables improving resistance to radio frequency interferences, for example, from different network nodes, for example.

In an implementation form of the invention, the burst transmission comprises at least two transmissions in a short time interval, and wherein each transmission of the at least two transmissions comprises a different wake-up signal instance of the sequence of at least two wake-up signal instances. By using a burst transmission comprising at least two transmissions in a short time interval, misdetection and false alarm problems at the user node may be alleviated or eliminated.

In a further implementation form of the invention, the at least two wake-up signal instances in the sequence of at least two wake-up signal instances comprises repetitive wake-up signal instances spaced substantially equally in time. This provides improved reliability of the wake-up signaling, thereby leading to reduced power consumption of the user node.

In a further implementation form of the invention, the network node is configured to generate a probe data packet, and transmit the probe data packet to the user node after transmitting the last wake-up signal instance of the sequence of at least two wake-up signal instances. When an acknowledgement to the probe data packet is received from the user node, the network node is configured to transmit payload data to the user node. This enables reducing data loss that could occur, for example, if the user node does not wake up for any reason. Further, data transmission capacity and/or latency may also improve.

In a further implementation form not covered by the scope of the claims, the probe data packet comprises a dummy packet or a predefined data portion of the payload data. Using payload data in the probe data packet may improve data transmission capacity.

In a further implementation form of the invention, the network node is further configured to transmit each wake-up signal instance within the sequence of at least two wake-up signal instances using a different beam. This may improve detection probability of the wake-up signal instances at the user node.

In a further implementation form not covered by the scope of the claims, the network node is further configured to transmit each wake-up signal instance within the sequence of at least two wake-up signal instances using more than one beam simultaneously in time. This may improve detection probability of the wake-up signal instances at the user node.

In a further implementation form not covered by the scope of the claims, the network node is further configured to detect that the user node is in a sleep state, determine a degree of mobility of the user node, and based on the sleep state and the degree of mobility of the user node, change the number of wake-up signal instances in the sequence of wake-up signal instances and the number of beams used to transmit the wake-up signal instances. This may improve detection probability of the wake-up signal instances at the user node, especially when the user node moves during the sleep state.

In a further implementation form not covered by the scope of the claims, the network node is further configured to increase the number of repetitions of the sequence of at least two wake-up signal instances based on the sleep state and the degree of mobility of the user node. This may improve detection probability of the wake-up signal instances at the user node, especially when the user node moves during the sleep state.

In a further implementation form not covered by the scope of the claims, the network node is further configured to transmit at least one of the following parameters to the user node: a number of wake-up signal instances in the sequence of at least two wake-up signal instances; a time period between two wake-up signal instances in the sequence of at least two wake-up signal instances; a total bandwidth used for the wake-up signal instances in the sequence of at least two wake-up signal instances; a total number of frequency channels used for the frequency hopping pattern; and the frequency hopping pattern; and a maximum number of the sequences of at least two wake-up signal instances with a constant number of wake-up signal instances. This enables configuring the wake-up signaling on a per user node basis, thereby providing greater flexibility in the use of the wake-up signaling.

According to a further aspect of the invention, a user node is provided. The user node is configured to receive a sequence of at least two wake-up signal instances transmitted from a network node as a burst transmission, and decode the sequence of at least two wake-up signal instances. This provides improved reliability of the wake-up signaling, thereby leading to reduced power consumption of the user node. Further, the user node is configured to receive from the network node a frequency hopping pattern used to transmit the sequence of at least two wake-up signal instances. The frequency hopping pattern defines a frequency channel from an available set of frequency channels for each of the wake-up signal instances. The user node is then configured to switch among the frequency channels according to the frequency hopping pattern to receive the sequence of at least two wake-up signal instances. This enables improving resistance to radio frequency interferences, for example, from different network nodes.

In an implementation form of the invention, the burst transmission comprises at least two transmissions in a short time interval, and wherein each transmission of the at least two transmissions comprises a different wake-up signal instance of the sequence of at least two wake-up signal instances. By using a burst transmission comprising at least two transmissions in a short time interval, misdetection and false alarm problems at the user node may be alleviated or eliminated.

In a further implementation form of the invention, the at least two wake-up signal instances in the sequence of at least two wake-up signal instances comprises repetitive wake-up signal instances spaced substantially equally in time. This provides improved reliability of the wake-up signaling, thereby leading to reduced power consumption of the user node.

In a further implementation form not covered by the scope of the claims, the user node is configured to apply a first wake-up detection mode; and decode, in accordance with the first wake-up detection mode, a downlink control channel when at least one of the wake-up signal instances within the sequence of at least two wake-up signal instances is decoded to be present. This may improve detection probability and be appropriate for delay sensitive traffic and applications.

In a further implementation form not covered by the scope of the claims, the user node is configured to apply a second wake-up detection mode; and decode, in accordance with the second wake-up detection mode, a downlink control channel when the number of wake-up signal instances decoded to be present within the sequence of at least two wake-up signal instances is greater than a predetermined number. This may improve detection probability and reduce false alarms.

In a further implementation form not covered by the scope of the claims, the user node is configured to apply a third wake-up detection mode; and decode, in accordance with the third wake-up detection mode, a downlink control channel when all wake-up signal instances within the sequence of wake-up signal instances are decoded to be present. This may reduce false alarms and be appropriate for applications when the power consumption is more important than a time delay.

In a further implementation form not covered by the scope of the claims, the user node is further configured to receive an indication from the network node, the indication indicating whether to apply the first wake-up detection mode, the second wake-up detection mode or the third wake-up detection mode. This enables a solution in which the user node may rely on the network node to decide about which of the wake-up detection modes to choose from.

In a further implementation form of the invention, the user node is further configured to activate a timer adjusted to a predefined number of wake-up cycles. A wake-up cycle is a time interval between first wake-up signal instances of two adjacent sequences of wake-up signal instances. When all wake-up signal instances are decoded to be absent in all of the wake-up cycles during the timer, the user node is configured to start decoding a downlink control channel. This provides a solution in which the user node is capable of estimating the channel and reporting a very recent channel estimate to the network node. This can also prevent scenarios in which previous channel estimates are not valid anymore.

In a further implementation form not covered by the scope of the claims, the user node is further configured to receive at least one of the following parameters from the network node: a number of wake-up signal instances in the sequence of at least two wake-up signal instances; a time period between two wake-up signal instances in the sequence of at least two wake-up signal instances; a total bandwidth used for the wake-up signal instances in the sequence of at least two wake-up signal instances; the number of frequency channels used for the frequency hopping pattern; and a maximum number of the sequences of at least two wake-up signal instances with a constant number of wake-up signal instances. This enables configuring the wake-up signaling on a per user node basis, thereby providing greater flexibility in the use of the wake-up signaling.

According to a further aspect of the invention, a method of operating a network node is provided. The method comprises generating a sequence of at least two wake-up signal instances; and transmitting the sequence of at least two wake-up signal instances by using a burst transmission. This provides improved reliability of the wake-up signaling, thereby leading to reduced power consumption of the user node. Further, the method comprises transmitting the sequence of at least two wake-up signal instances by using a frequency hopping pattern defining a frequency channel from an available set of frequency channels for each of the wake-up signal instances. This enables improving resistance to radio frequency interferences, for example, from different network nodes, for example.

According to a further aspect of the invention, a method of operating a user node is provided. The method comprises receiving a sequence of at least two wake-up signal instances transmitted as a burst transmission from a network node; and decoding the sequence of at least two wake-up signal instances. This provides improved reliability of the wake-up signaling, thereby leading to reduced power consumption of the user node. Further, the method comprises receiving from the network node a frequency hopping pattern used to transmit the sequence of at least two wake-up signal instances. The frequency hopping pattern defines a frequency channel from an available set of frequency channels for each of the wake-up signal instances. The method then comprises switching among the frequency channels according to the frequency hopping pattern to receive the sequence of at least two wake-up signal instances. This enables improving resistance to radio frequency interferences, for example, from different network nodes.

Other features and advantages of the invention will be apparent upon reading the following detailed description and reviewing the accompanying drawings.

### BRIEF DESCRIPTION OF THE DRAWINGS

In the following examples are described in more detail with reference to the attached figures and drawings, in which:
Fig. 1 shows the typical operation of the c-DRX mechanism used in the LTE standard.
Fig. 2 shows conventional wake-up signaling.
Fig. 3 shows one example of WUS misdetection according to the conventional wake-up signaling.
Fig. 4 shows one example of false alarm peculiar to the conventional wake-up signaling.
Fig. 5 shows an exemplary block diagram of a network node in accordance with an embodiment.
Fig. 6 shows an example of wake-up signaling performed by the network node shown in Fig. 5.
Fig. 7 shows an example in which a frequency hopping pattern is used when performing the wake-up signaling shown in Fig. 6.
Fig. 8 shows the dependencies of the wake-up signaling on a number of wake-up signal instances and a number of beams used to transmit the wake-up signal instances.
Fig. 9 shows an exemplary block diagram of a user node in accordance with an embodiment.
Fig. 10 shows an exemplary embodiment of a wake-up receiver used in the user node shown in Fig. 9.
Figs. 11 and 12 show power consumption and a signal flow diagram in case of a first wake-up detection mode for the user node shown in Fig. 9.
Fig. 13 shows a signal flow diagram describing a second wake-up detection mode for the user node shown in Fig. 9.
Fig. 14 shows a signal flow diagram describing a third wake-up detection mode for the user node shown in Fig. 9.
Fig. 15A-15B shows the comparison of the wake-up signaling according to an embodiment of the invention and the conventional wake-up signaling.
Fig. 16 shows an example in which a wake-up timer is used when performing the wake-up signaling according to the invention.
Fig. 17 shows an example in which the wake-up signaling according to the invention is used for periodical and non-periodical traffics.
Fig. 18 shows a signal flow diagram describing a process of allocating wake-up signal parameters to the user node shown in Fig. 9.
FIG. 19 illustrates a flowchart of a method of operating a network node according to an embodiment.
FIG. 20 illustrates a flowchart of method of operating a user node according to an embodiment.

In the following identical reference signs refer to identical or at least functionally equivalent features.

### DETAILED DESCRIPTION

In the following description, reference is made to the accompanying drawings, which form part of the disclosure, and in which are shown, by way of illustration, specific aspects, embodiments and examples in which the invention may be placed. It is understood that other aspects may be utilized and structural or logical changes may be made without departing from the scope of the invention. The following detailed description, therefore, is not to be taken in a limiting sense, as the scope of the invention is defined be the appended claims. Further, the invention can be embodied in many other forms and should not be construed as limited to any certain structure or function disclosed in the following description.

According to the detailed description, it will be apparent to ones skilled in the art that the scope of the invention covers any embodiment of the invention, which is disclosed herein, irrespective of whether this embodiment is implemented independently or in concert with any other embodiment of the invention. For example, the user node and the network node disclosed herein can be implemented in practice by using any numbers of the embodiments provided herein. Furthermore, it should be understood that any embodiment of the invention can be implemented using one or more of the elements presented in the appended claims.

The word "exemplary" is used herein in the meaning of "used as an example or illustration". Unless otherwise stated, any embodiment or aspect described herein as "exemplary" should not be construed as preferable or having an advantage over other implementations or aspects.

The term "network node" used herein may relate to a base station that is referred to as a base transceiver station (BTS) in terms of the 2G communication technology, a NodeB in terms of the 3G communication technology, an evolved NodeB (eNodeB) in terms of the 4G communication technology, and a gNB in terms of the 5G communication technology. The base station may be implemented as a basic service set (BSS) representing a set of all base stations communicating with each other, or an extended service set (ESS) representing a set of connected BSSs.

As used herein, the term "user node" may refer to user equipment, a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, or a handset. Some practical examples of the user node include a cellular phone, a smart phone, a laptop, a personal digital assistant (PDA), a satellite radio receiver, a multimedia device, a video device, a digital audio player (e.g., MP3 player), a camera, a game console, or any other similarly functioning device.

As used herein, the term "baseband unit" (or BBU for short), also known as a baseband processor, relates to an electronic device (ED) or an ED pool in which baseband processing is carried out for a communication channel between the network node and the user node. Some practical examples of the BBU include a modem, a front-end processor, a communication controller, or any other similarly functioning device. In general, the BBU is responsible for digital signal processing and may, for example, execute the following functions: digital intermediate frequency (IF) to baseband conversion/digital baseband to IF conversion, modulation/demodulation, constellation mapping/demapping, scrambling/descrambling, and/or encoding/decoding.

The term "wake up" and its derivatives used herein may relate to a transition of the user node from a sleep state characterized by a low or lower power consumption into an active state characterized by a high or higher power consumption. In particular, such a transition may result in turning on the BBU responsible for the baseband processing of the communication channel between the network node and the user node.

As used herein, the term "wake-up signal" (or WUS for short) may relate to a wireless signal having encoded thereon instructions for the user node either to wake up or continue being in a sleep state. Being instructed to be woken up, the user node, i.e. the BBU included therein, starts processing a communication channel. The WUS may be generated and transmitted by the network node, and then received by the user node.

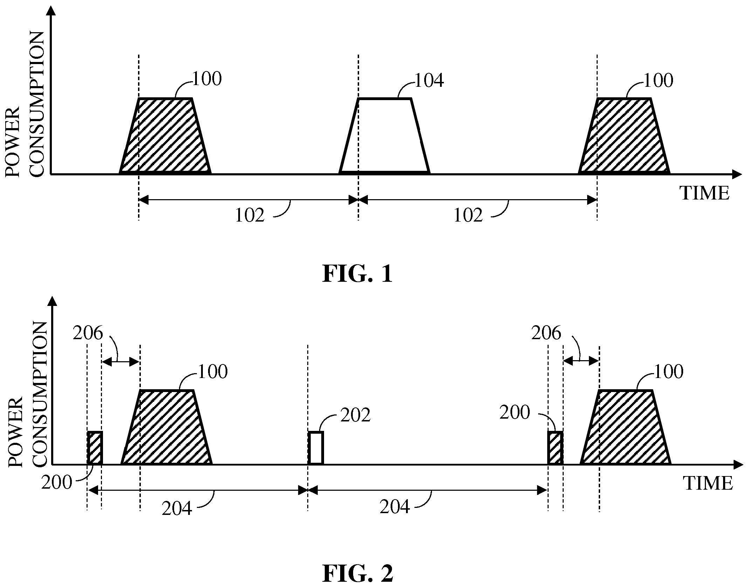

Fig. 1 shows the typical operation of the c-DRX mechanism used in the LTE standard. As follows from Fig. 1, power saving in the user node is achieved by turning on the BBU and, consequently, making the transition of the user node into the active state (which is schematically shown as shaded wake-up regions 100 periodically: one time per a DRX cycle 102. The DRX cycle 102 and other ordinary DRX parameters are configured and communicated by the network node to the user node. In the wake-up region 100, by using the BBU, the user node first decodes a physical downlink control channel (PDCCH) to obtain control data, and then decodes a physical downlink shared channel (PDSCH) by using the control data to receive payload data assigned to the user node from the network node.

It should be noted that the control data comprises, for example, metadata, headers, feedback (such as acknowledgement (ACK) and negative acknowledgment (NACK) messages for the payload), overhead information, or other types of data used to enable payload delivery. As for the payload data, it may relate to actual data intended to the user node.

However, a problem may occur when there is no payload data to be received by the user node, which corresponds to an empty (or unshaded) wake-up region 104 in Fig. 1. The c-DRX mechanism does not allow for any way of informing the user node about the absence of the payload data. Therefore, the user node will continue waking up during each DRX cycle 102, thus increasing the power consumption even if there is no payload data to be received.

To avoid such power wasting (i.e. the occurrence of the empty wake-up region 104), wake-up signaling has been proposed, which is schematically shown in Fig. 2. The idea behind the wake-up signaling consists in keeping the user node informed about the presence or absence of payload data to be sent to the user node by using wake-up signals (WUS) periodically transmitted by the network node to the user node. In particular, each WUS may be a binary signal carrying a binary one or zero corresponding to the presence or absence of the payload data, respectively, or vice versa. In Fig. 2, the WUS corresponding to the presence of payload data is denoted as 200, while the WUS corresponding to the absence of the payload data is denoted as 202. Each of the WUSs, irrespective of their content, is transmitted by the network node during each wake-up cycle 204. An offset 206 may represent the number of subframes after the WUS 200 that the user node decodes the Physical Downlink Control Channel (PDCCH). Thus, the user node may wake up "partly" (i.e. without turning on the BBU) and earlier compared to the c-DRX mechanism, receive and decode the WUS, and decide on turning on the BBU in case of the WUS 200 or sleeping further in case of the WUS 202. The parameters of the wake-up signaling, such as those mentioned above, may be configured and transmitted by the network node to the user node.

However, the wake-up signaling implemented in accordance with the principle illustrated in Fig. 2 may lead to other problems, such as a WUS misdetection and false alarms.

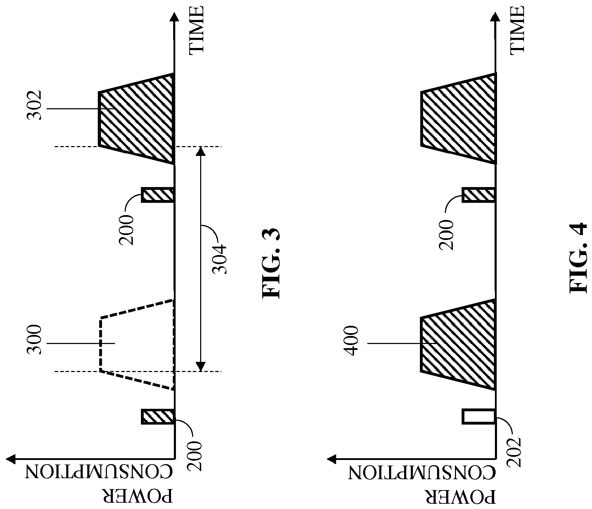

One example of the WUS misdetection is schematically shown in Fig. 3. In particular, it is intended to illustrate that the user node receives the WUS but decodes it incorrectly, i.e., in the context of the binary WUS signal, as the WUS carrying "0" instead of "1". This causes the user node to keep the BBU turned off (which corresponds to an unshaded region 300 in the Fig. 3), thereby resulting in missing payload data from the network node. In this case, the network node re-transmits the same WUS, and it is intended that the user node decodes the WUS correctly this time, thereby deciding to turn on the BBU (which corresponds to a shaded region 302 in the figure). Although the user node eventually receives the missing payload data, there will be a time delay 304 occurred due to the WUS misdetection, the time delay 304 being equal (in this example) to one DRX cycle.

As for the false alarm, one example thereof is shown in Fig. 4. Here it is intended to illustrate that the user node decodes the WUS correctly but identifies the decoded WUS mistakenly, i.e. as the WUS 200 instead of the WUS 202. This causes the user node to turn on the BBU (which corresponds to a shaded region 400 in the Fig. 4), thereby leading to high power consumption for no reason.

The solution discussed below takes into account the above-mentioned drawbacks, and is directed to improving the reliability of the wake-up signaling, thereby reducing the power consumption of the user node.

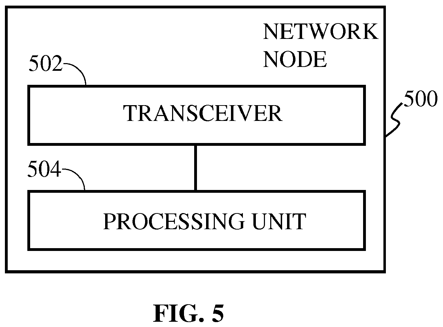

Fig. 5 illustrates an exemplary block diagram of a network node 500 in accordance with an embodiment. The network node 500 is configured to generate, for a user node, a sequence 600 of at least two wake-up signal instances, and transmit, by using a burst transmission, the sequence 600 of at least two wake-up signal instances. As shown in Fig. 5, the network node 500 may comprise a transceiver 502 and a processing unit 504. The processing unit 504 may be configured to generate the sequence 600 of WUS instances, and the transceiver 502 may be configured to transmit the sequence 600 of WUS instances to the user node by using a burst transmission. Here it should be noted that the term "WUS instances" may mean repetitive copies of the same WUS, which are all transmitted successively to the user node during each wake-up cycle 204. Further, the burst transmission may comprise multiple, for example, at least two transmissions in a short time interval, and each transmission of the at least two transmissions comprises a different wake-up signal instance of the sequence 600 of at least two wake-up signal instances compared to the wake-up instance of the sequence for another transmission.

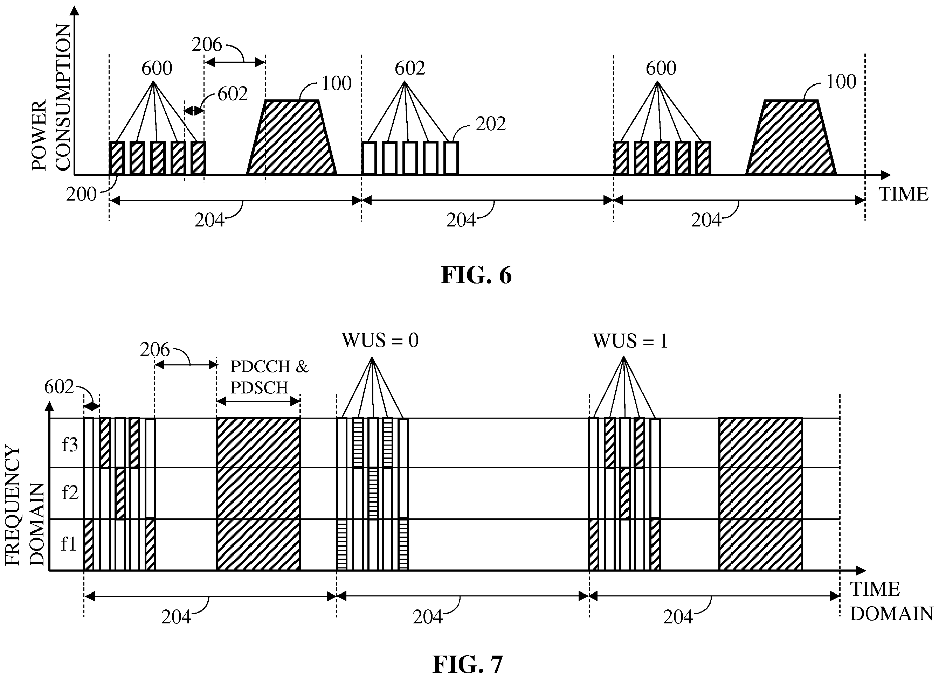

One example of the wake-up signaling performed by the network node 500 is shown in Fig. 6. Although may be illustrated in Fig. 6 that a sequence 600 of WUS instances comprises five WUS instances for the WUS 200 or the WUS 202, there may be more or fewer WUS instances in the sequence 600 of WUS instances in different situations, as will be discussed later. In any case, a total number of WUS instances is at least two. The reason for this may be that two or more WUS instances reduce the probability of occurrence of the above-mentioned WUS misdetection and false alarm because the user node has at least two "tries" to decode and identify the WUS correctly.

Referring to Fig. 6, it is intended that, at first, the sequence 600 of WUS instances for the WUS 200 is transmitted by the transceiver 502 of the network node 500 to the user node. The five WUS instances may be spaced substantially equally in time. It means that there is an inner time interval 602 between two adjacent WUS instances. The offset 206 may represent the number of subframes after the last WUS 200 that the user node decodes the Physical Downlink Control Channel (PDCCH). Thus, a WUS receiver of the user node receives and decodes the five WUS instances one by one, thereby increasing the chances of recognizing the WUS correctly, i.e. as the WUS 200. After that, the WUS receiver causes the BBU to turn on and start decoding the downlink control channel.

Also shown in Fig. 6 is another sequence 602 of WUS instances for the WUS 202 corresponding to the absence of the payload data in the network node 500, as mentioned earlier. In this case, the WUS receiver of the user node recognizes that there is no payload data to be received, and does not provide the turning-on instruction to the BBU, and the user node remains in the sleep state.

The transceiver 502 of the network node 500 is configured to transmit the sequence 600 of WUS instances by using a frequency hopping pattern defining a frequency channel from an available set of frequency channels for each of the WUS instances, as schematically illustrated in Fig. 7. In particular, it is intended that the transceiver 502 allocates all of the sequence 600 of WUS instances to three frequency channels f1, f2, and f3. More specifically, the first and fifth WUS instances are allocated to the frequency channel f1, the third WUS instance is allocated to the frequency channel f2, and the second and fourth WUS instances are allocated to the frequency channel f3. Thus, the frequency hopping pattern can be presented as {f1, f3, f2, f3, f1}. It will be apparent to those skilled in the art that such frequency hopping pattern shown in Fig. 7 is only illustrative and should not be construed as having no alternative. The frequency hopping pattern thus or differently implemented may be communicated to the user node in advance, so that the user node, i.e. the WUS receiver, is capable of receiving the sequence 600 of WUS instances by switching among the frequency channels according to the frequency hopping pattern. It should be also noted that the same frequency hopping pattern may be used for different user nodes. By using the frequency hopping pattern, it is possible to reduce the impact of unwanted interference from different network nodes on a particular part of frequency band.

In one embodiment, the network node 500 is configured to generate a probe data packet and transmit the probe data packet to the user node. When receiving an acknowledgement to the probe data packet from the user node, the network node 500 is further configured to transmit payload data to the user node. By using the probe data packet, it is possible to reduce the probability of missing or losing the payload data due to the WUS misdetection.

In one embodiment, the probe data packet may comprise a predefined data portion of the payload data or a dummy packet (i.e. comprise no payload data). In case the probe data packet comprises the predefined data portion of the payload data, the payload data transmitted by the network node 500 may comprise the remaining part of the payload data.

It should be noted that the predefined data portion may have a size defined according to a predicted probability of detection, which may be evaluated based on the statistics of the ACK/NACK messages from the user node versus the total number of the WUS instances sent by the network node 500. The lower the predicted probability, the lower size the predefined data portion.

In one embodiment, beamforming may be used together with the transmission of the sequence 600 of WUS instances. The network node may be configured to transmit each wake-up signal instance within the sequence 600 of at least two wake-up signal instances using a different beam.

In one embodiment, the network node may be configured to transmit each wake-up signal instance within the sequence 600 of at least two wake-up signal instances using more than one beam simultaneously in time. The network node may further be configured to detect that the user node is in a sleep state, determine a degree of mobility of the user node, and based on the sleep state and the degree of mobility of the user node, change the number of wake-up signal instances in the sequence 600 of wake-up signal instances and the number of beams used to transmit the wake-up signal instances. The network node may further be configured to increase the number of repetitions of the sequence 600 of at least two wake-up signal instances based on the sleep state and the degree of mobility of the user node.

Multi-beam WUS instance transmissions (i.e. a process of transmitting each of the WUS instances using multiple beams simultaneously in time or using a different beam) can increase the robustness of the beamformed WUS instance. Furthermore, the number of wake-up instances ("b_size") can be configured based on a user node mobility and configured to be increased when the user node moves. Then it would be less probable that the user node cannot receive the WUS instance(s) due to beam misalignment.

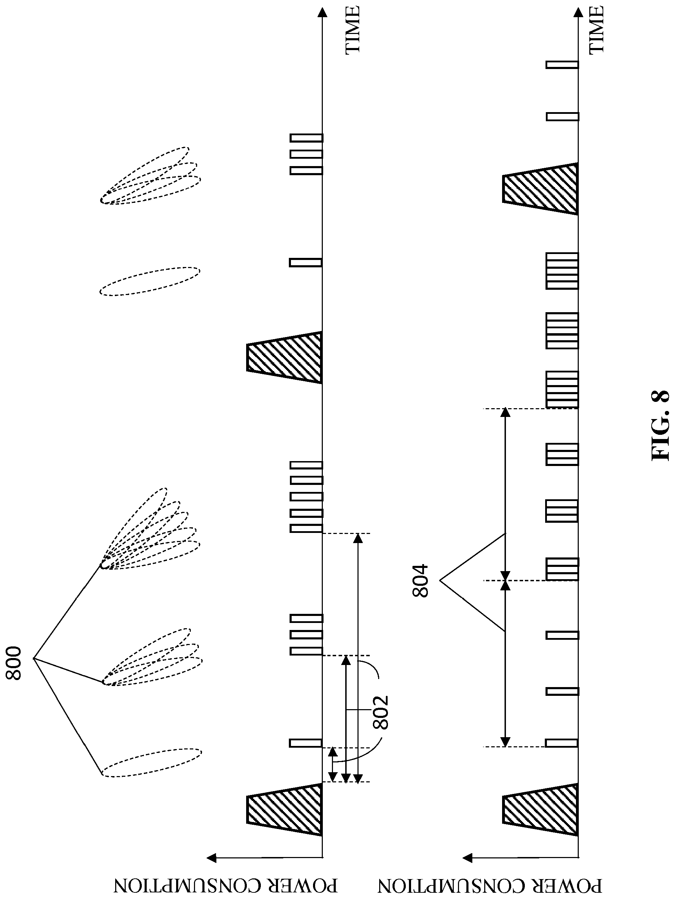

Fig. 8 illustrates examples of using multiple beams in transmissions from the network node 500. The b_size and the number of beams 800 used for transmitting the sequence 600 of WUS instances may be configured to be dependent on a sleep time 802 and user node mobility. For example, for high mobility user nodes (for which the mobility is hard to estimate), the b_size, a number 804 of repetitions for the sequence 600 of WUS instances, and the number of beams 800 may be configured to be increased more rapidly over time than for low mobility user nodes. For stationary user nodes, one beam may be used.

In one embodiment, adaptive b_size determination for the beamformed sequence 600 of WUS instances could be defined as: $b _ size = ceil \left(min\left(cur_sleep_time/b_inc_int+\left(init_b_size-1\right),b_size_max\right)\right) ,$ where *cur_sleep_time* is the duration of the sleep time, *burst_inc_int* is the interval of *b_size* increase and *b_size_max* is the maximum value for *b_size.* The value *init_b_size* corresponds to the initial *b_size* when sleep starts. The function *ceil*() returns the smallest integer greater than or equal to a given number.

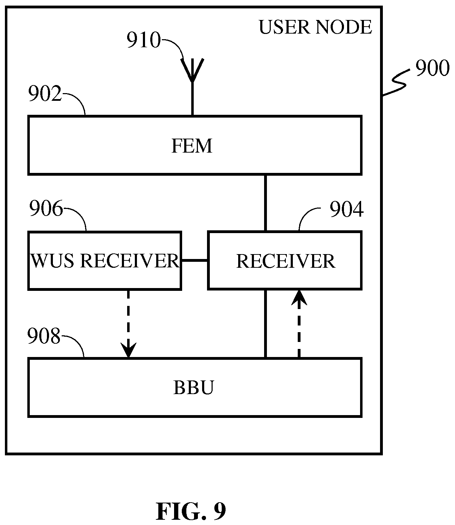

Fig. 9 illustrates an exemplary block-scheme of a user node 900 for a wireless communication network in accordance with an embodiment. The user node 900 is configured to receive a sequence 600 of at least two wake-up signal instances transmitted from the network node 500 as a burst transmission, and decode the sequence 600 of at least two wake-up signal instances.

The user node 900 may comprise a front-end module (FEM) 902, receiver 904, a WUS receiver 906, a Base Band Unit (BBU) 908 and an antenna 910. The receiver 904 may be configured to receive payload data through a downlink data channel, such as the PDSCH. The WUS receiver 906 may be configured to receive and decode a sequence 600 of WUS instances through a downlink control channel, such as the PDCCH, or a dedicated wake-up channel using specially allocated time-frequency resources of the wireless communication network. The BBU 908 is configured, when turned on based on a turning-on instruction from the WUS receiver 906, to process the downlink control channel to obtain the control data, and then communicate the control data to the receiver 904 for use in decoding the downlink data channel to obtain payload data.

The WUS receiver 906 may be implemented as part of the user node 900 or as an individual device removably coupled to the user node 900. In the latter case, the WUS receiver 906 may be implemented as a standalone secondary modem. In the former case, the WUS receiver 906 may be implemented, together with the front-end module 902, the receiver 904 and the BBU 908, in one or more conventional radio frequency integrated circuits (RFICs).

In an embodiment, the burst transmission may comprise multiple, for example, at least two transmissions in a short time interval. The short time interval may be as small as a subframe, and may be equal to about 1 millisecond, for example, in the LTE. It is clear that in other embodiments, the time interval may be different than this. Each transmission of the at least two transmissions comprises a different wake-up signal instance of the sequence 600 of at least two wake-up signal instances compared to the wake-up instance of the sequence for another transmission. Further, the sequence 600 of at least two wake-up signal instances may comprise repetitive wake-up signal instances spaced substantially equally in time.

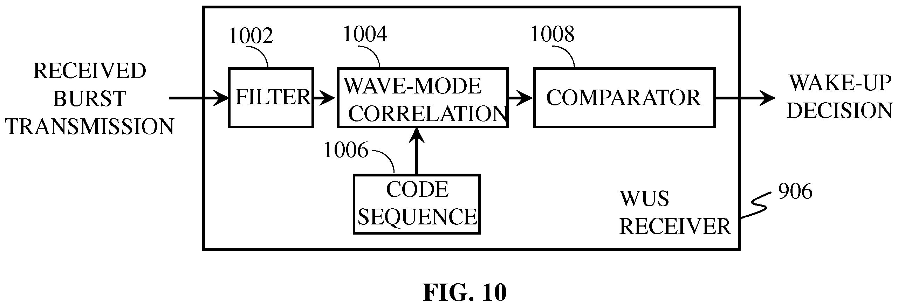

Fig. 10 illustrates one exemplary embodiment of the WUS receiver 906 for the user node 900. As shown, the WUS receiver 906 comprises a filter 1002, a wave-mode correlation unit 1004, a code sequence generation unit 1006, and a comparator 1008. Before briefly describing the function of each constructive element included in the WUS receiver 906 thus implemented, let us first assume that the network node 500 carries out the burst transmission of the sequence 600 of WUS instances on subcarriers pre-allocated for the wake-up signaling. Given this, the filter 1002 is configured to receive the burst transmission from the network node 500 over the subcarriers corresponding to the wake-up signaling, and apply a filtering operation to the received burst transmission, thereby producing a filtered signal. After that, the wave-mode correlation unit 1004 is configured to perform frequency-domain correlation between a code sequence of the user node 900, which is locally generated by the code sequence generation unit 1006, and the filtered signal from the filter 1002, thus yielding an amount of correlation. Next, the comparator 1008 is configured to compare the amount of correlation from the wave-mode correlation unit 1004 with a pre-defined threshold (either adaptive or fixed). If the amount of correlation is larger than the threshold, it means that the sequence 600 of WUS instances comprises the WUS instances of the WUS 200; otherwise, it is determined that the sequence 600 of WUS instances comprises the WUS instances of the WUS 202. In the former case, the WUS receiver 906 will instruct the BBU 908 to turn on and start processing the downlink data channel. In the latter case, the user node 900 continues to remain in a sleep state.

The user node 900 is configured to receive from the network node 500 a frequency hopping pattern used to transmit the sequence 600 of at least two wake-up signal instances, the frequency hopping pattern defining a frequency channel from an available set of frequency channels for each of the wake-up signal instances; and switch among the frequency channels according to the frequency hopping pattern to receive the sequence 600 of at least two wake-up signal instances. The frequency hopping pattern has been discussed in more detail in relation to Fig. 7, and therefore, the discussion is not repeated here.

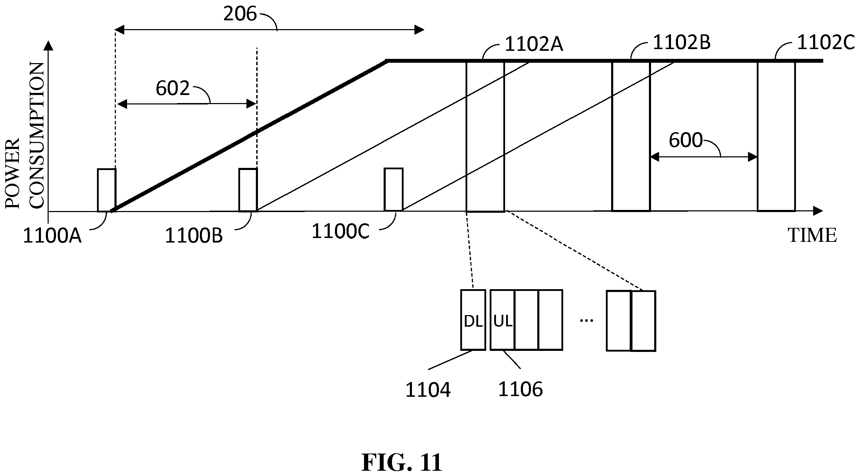

In an embodiment, the user node 900 may be configured to activate or apply one of three wake-up detection modes. Moreover, the user node 900 may decide itself which of the three wake-up detection modes to use, or the network node 500 may provide a corresponding indication to the user node 900. Each of the three wake-up detection modes will be now described with reference to Figs. 11-14.

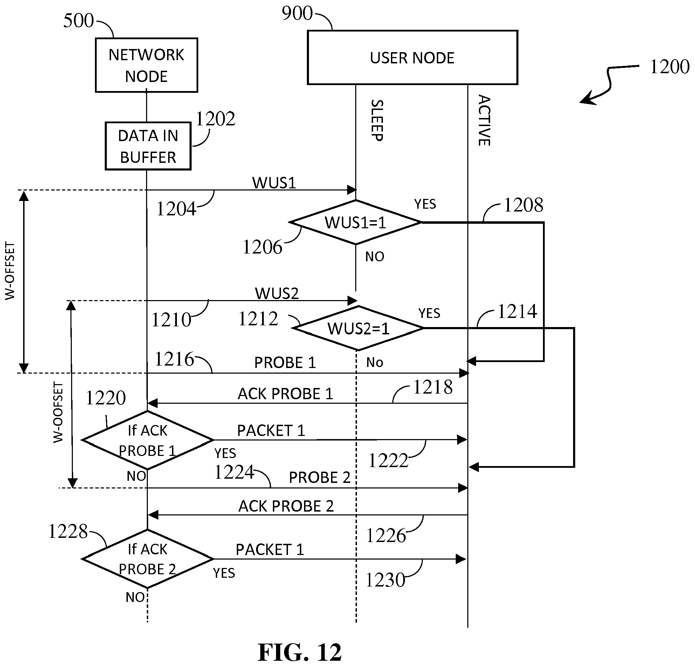

A first wake-up detection mode is explained by Figs. 11 and 12. In particular, Fig. 11 shows the power consumption of the user node 900 in case when the sequence 600 of WUS instances for the WUS 200 comprises three WUS instances 1100A - 1100C. Consequently, there are three time slots 1102A - 1102C each corresponding to one of the WUS instances 1100A-1100C, in which a probe data packet 1216 may be transmitted by the network node 500 and received by the user node 900. In this case, it is intended that the WUS receiver 906 of the user node 900 correctly decodes and identifies the second WUS instance 1102B, for which reason the BBU 908 and the receiver 904 are activated to receive the probe data packet 1216 sent by the transceiver 502 of the network node 500. It should be noted that the probe data packet 1216 may be repeatedly sent by the transceiver 502 after the sequence 600 of WUS instances as soon as possible (but with the requirement that the time interval between the transmissions of the last WUS instance and the probe data packet 1216 is more than the offset 206), until the probe data packet 1216is successfully received by the receiver 904 of the user node 900. In Fig. 11, the probe data packet is denoted as 1104 and transmitted from the network node 500 to the user node 900 through the downlink data channel, while the ACK/NACK message therefor is denoted as 1106 and transmitted from the user node 900 to the network node 500 through an uplink control channel, such as a physical uplink control channel (PUCCH).

Fig. 12 shows a signal flow diagram 1200 for the first wake-up detection mode in the situation illustrated in Fig. 11. At first, the network node 500 receives the payload data intended to the user node 900 and stores 1202 the payload data in a buffer or any other storage resided in the network node 500. At the same time, the user node 900 is intended to be in a sleep state. Next, the network node 500 generates the sequence 600 of the WUS instances for the WUS 200 (since the payload data are present), and transmits the first WUS instance (denoted as WUS1 1204) to the user node 900. The user node 900, i.e. the WUS receiver 906, receives and decodes the WUS1 1204. If the WUS1 1204 is decoded correctly as the binary one, i.e. the result "YES" for the conditional block 1206, the user node 900 decides to make 1208 a transition from a sleep state into an active state after the last WUS instance of the sequence 600 of WUS instances is received. Once the transmission of the sequence 600 of WUS instances is completed, the network node 500 generates and transmits a probe data packet 1216 (denoted as probe1) to the user node 900 in the time slot 1102A. If the user node 900 receives the probe1 1216 successfully, it transmits an ACK message 1218 for the probe1 1216 to the network node 500 in the time slot 1102A. The network node 500 determines that the probe1 1216 is received by the user node 900 based on the ACK message (see the result "YES" for the conditional block 1220) and transmits the entire or remaining payload data (denoted as packet1 1222) to the user node 900. If the network node 500 does not receive the ACK message 1218 for any reason (see the result "NO" for the conditional block 1220), the network node 500 may re-transmit 1224 the probe1 to the user node 900 until the ACK message is received from the user node 900. After that, the network node 500 transmit the packet1 to the user node 900.

However, if the WUS1 1204 is decoded incorrectly as the binary zero, i.e. the result "NO" for the conditional block 1206, which corresponds to the situation in Fig. 11, the user node 900 does not still decide on making the transition into the active state after the complete transmission of the sequence 600 of WUS instances. In this case, it is intended that the second WUS instance (denoted as WUS2 1210) transmitted by the network node 500 is received and decoded correctly by the user node 900 (see the result "YES" for the conditional block 1212). Therefore, the user node 900 decides to make 1214 a transition from the sleep state into the active state after the last WUS instance of the sequence 600 of WUS instances is received. The rest of the operations are similar to those described above for the WUS1 1204. In particular, the network node 500 generates and transmits the probe data packet 1224 (denoted as probe2) to the user node 900, but now in the time slot 1102B. Here, "2" in "probe2" just means that the probe packet corresponds to the WUS2 1210, and the probe2 1224 may be the same as the probe1. If the user node 900 receives the probe2 successfully, it transmits the ACK message 1226 for the probe2 1224 to the network node 500 in the time slot 1102B. The network node 500 determines that the probe2 1224 is received by the user node 900 based on the ACK message 1226 (see the result "YES" for the conditional block 1228) and transmits 1130 the packet1 to the user node 900. If the network node 500 does not receive the ACK message 1226 for any reason (see the result "NO" for the conditional block 1228), the network node 500 may re-transmit the probe2 to the user node 900 until the ACK message is received from the user node 900. After that, the network node 500 transmits the packet1 1230 to the user node 900.

It should be apparent to those skilled in the art that the number of the conditional blocks used in the first wake-up detection mode depends on the total number of the WUS instances in the sequence 600 of WUS instances. Thus, the number of the conditional blocks may be more or less than that shown in Fig. 12.

It should be also apparent to those skilled in the art that each WUS instance may be encoded in any other manner, and the binary one and zero described above and used to indicate the presence and absence of the payload data are given only for explanatory purposes.

In general, the first wake-up detection mode can be summarized as follows. When at least one WUS instance of the sequence 600 of WUS instances is decoded correctly by the user node 900, the user node 900 is in the active state when the network node 500 generates and transmits the probe data packet 1216 to the user node 900 after the complete transmission of the sequence 600 of WUS instances. Once the ACK message for the probe data packet 1216 is received by the network node 500, the payload data is transmitted from the network node 500 to the user node 900.

The first wake-up detection mode may improve the misdetection but reduces the false alarms. As an example, an overall misdetection rate P_omd is equal to P_smd^{b-size}, where P_smd is a misdetection rate for a particular signal structure, and b_size is the total number of the WUS instances in the sequence 600 of WUS instances, while an overall false alarm P_ofa is equal to 1-(1-P_sfa)^{b-size}, where P_sfa is a false alarm rate for the particular signal structure. For example, if P_smd and P_sfa are equal to 0.01 and 0.1, respectively, and assuming that the b_size is equal to 5, P_omd and P_ofa will be equal to 10⁻¹⁰ and 0.40951, respectively. As can be seen, the first wake-up detection mode improves the detection probability and increases false alarm, and hence more appropriate for delay sensitive traffic and applications.

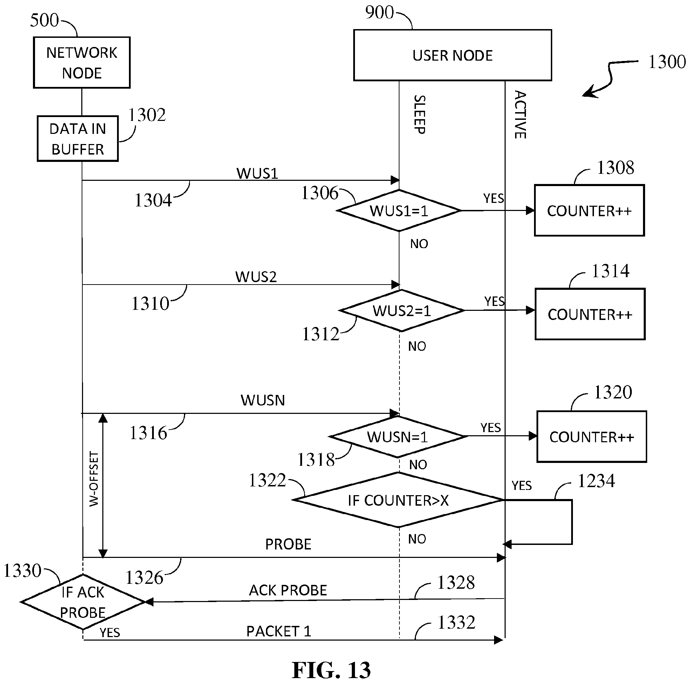

Fig. 13 illustrates a signal flow diagram 1300 for a second wake-up detection mode. An initial value of a counter in this example is 0. At first, the network node 500 receives the payload data intended to the user node 900 and stores 1302 the payload data in the buffer or any other storage resided in the network node 500. At the same time, the user node 900 is intended to be in the sleep state. Next, the network node 500 generates the sequence 600 of the WUS instances for the WUS 200 (since the payload data are present), and transmits WUS1 1304 to the user node 900. The user node 900, i.e. the WUS receiver 906, receives and decodes the WUS1 1304. If the WUS1 1304 is decoded correctly as the binary one, i.e. the result "YES" for the conditional block 1306, the user node 900 triggers 1308 a counter additionally provided therein and sets a counter value to 1. If the WUS1 1304 is decoded incorrectly as the binary zero, i.e. the result "NO" for the conditional block 1306, the counter is not triggered or, in other words, the counter value is equal to 0. Then, the network node 500 transmits WUS2 1310 to the user node 900. If the WUS2 1310 is decoded correctly, i.e. the result "YES" for the conditional block 1312, the user node 900 increases 1314 the counter value by one (i.e. the counter value is now equal to 2); otherwise, in case of the result "NO" for the conditional block 1312, the counter value remains unchanged (i.e. either 1 or 0 depending on the result for the conditional block 1306). These operations substantially consisting in deciding whether to increase or keep the counter value unchanged are performed for each subsequent WUS instance of the sequence 600 of WUS instances. When the last WUS instance (denoted as WUSN, where N is equal to the total number (b_size) of the WUS instances in the sequence 600 of WUS instances) is transmitted 1316 to the user node 900 and subjected to the operations defined by the blocks 1318 and 1320, the user node 900 determines whether the resulting counter value is more than a predefined number, while being in the sleep state. If the counter value exceeds a predefined number X (see the result "YES" for the conditional block 1322), the user node 900 makes 1324 a transition from a sleep state into an active state, and the network node 500 generates and transmits a probe data packet 1326 to the user node 900. The user node 900 sends an ACK 1328 message in response to the probe data packet 1326 to the network node 500. The network node 500 determines that the probe data packet 1326 is received by the user node 900 based on the ACK message (see the result "YES" for the conditional block 1330), and transmits a packet1 1332 to the user node 900. If there is no ACK message for the probe data packet 1326, the network node 500 may re-transmit the probe data packet to the user node 900 until the ACK message is received from the user node 900.

If the counter value does not exceed the predefined number X (see the result "NO" for the conditional block 1322), the user node 900 remains in the sleep state.

Again, the number of the conditional blocks in the second wake-up detection mode depends on the total number of the WUS instances in the sequence 600 of WUS instances, and may be more or less than that shown in Fig. 13.

It should be also apparent to those skilled in the art that each WUS instance may be encoded in any other manner, and the binary one and zero described above and used to indicate the presence and absence of the payload data are given only for explanatory purposes.

Moreover, in one example, the predefined number X used in the second wake-up detection mode is a number that is more than half of the odd b_size. As an example, assuming that the b_size is equal to 5, the predefined number should be more than 3 to cause the activation of the second wake-up detection mode. If the b_size is equal to 6, the predefined number should be also more than 3 to cause the activation of the second wake-up detection mode.

In general, the second wake-up detection mode can be summarized as follows. When the number of the WUS instances decoded as the binary one is more than the predefined number, the user node 900 is in the active state when the network node 500 generates and transmits the probe data packet to the user node 900 after the complete transmission of the sequence 600 of WUS instances. Once the ACK message for the probe data packet is received by the network node 500, the payload data is transmitted from the network node 500 to the user node 900.

The second wake-up detection mode may reduce both the misdetection and false alarms. The overall misdetection and false alarm for the second wake-up detection mode can be written as follows: $P _ omd = 1 - {\sum }_{k = 0}^{X} \left(\begin{matrix}{b}_{size} \\ k\end{matrix}\right) {{P}_{smd}}^{k} {\left(1-P_smd\right)}^{{b}_{size} - k} ,$ $P _ ofa = 1 - {\sum }_{k = 0}^{X} \left(\begin{matrix}b _ size \\ k\end{matrix}\right) P _ {sfa}^{k} {\left(1-P_sfa\right)}^{{b}_{size} - k} ,$ where X is the floor function of b_size/2. For instance, if P_smd and P_sfa are equal to 0.01 and 0.1, respectively, and assuming that the b_size is equal to 5, P omd and P_ofa will be equal to 0.0000098 and 0.00856, respectively. As can be seen, the second wake-up detection scheme improves the detection probability and provides lower false alarms.

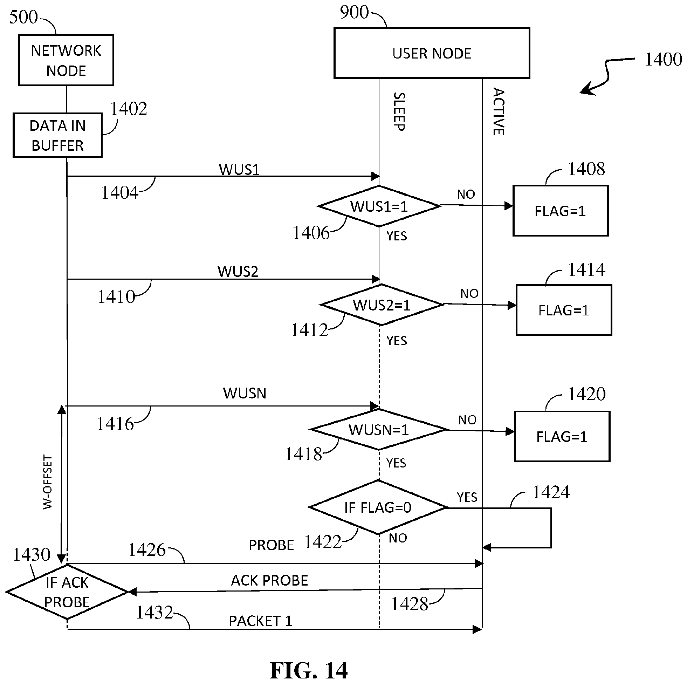

Fig. 14 illustrates a signal flow diagram 1400 for a third wake-up detection mode. An initial value of a flag in this example is 0. At first, the network node 500 receives the payload data intended to the user node 900 and stores 1402 the payload data in a buffer or any other storage resided in the network node 500. At the same time, the user node 900 is intended to be in a sleep state. Next, the network node 500 generates the sequence 600 of the WUS instances for the WUS 200 (since the payload data are present), and transmits WUS1 1404 to the user node 900. The user node 900, i.e. the WUS receiver 906, receives and decodes the WUS1 1404. If the WUS1 1404 is decoded incorrectly as the binary zero, i.e. the result "NO" for the conditional block 1406, the user node 900 sets 1408 a flag to 1. If the WUS1 1404 is decoded correctly as the binary one, i.e. the result YES" for the conditional block 1406, the flag remains to be set to 0. Then, the network node 500 transmits WUS2 1410 to the user node 900. If the WUS2 1410 is decoded correctly, i.e. the result "YES" for the conditional block 1412, the flag remains 1414 to be set to 0; otherwise, in case of the result "NO" for the conditional block 1412, the flag is still set as 1. These operations substantially consisting in deciding whether to set the flag to 1 or 0 are performed for each subsequent WUS instance of the sequence 600 of WUS instances. When WUSN 1416 is transmitted to the user node 900 and subjected to the operations defined by the conditional block 1418 and the block 1420, the user node 900 determines whether the flag is set to 1 or 0, while being in the sleep state. If the flag is to 0 (see the result "YES" for the conditional block 1422), the user node 900 makes 1424 the transition from the sleep state into the active state, and the network node 500 generates and transmits the probe data packet 1426 to the user node 900. The user node 900 sends an ACK message 1428 in response to the probe data packet 1426 to the network node 500. The network node 500 determines that the probe data packet 1426 is received by the user node 900 based on the ACK message 1428 (see the result "YES" for the conditional block 1430), and transmits the packet1 1432 to the user node 900. If there is no ACK message for the probe data packet 1426, the network node 500 may re-transmit the probe data packet to the user node 900 until the ACK message is received from the user node 900.

However, if the flag is set to 1 (see the result "NO" for the conditional block 1422), the user node 900 remains in the sleep state.

Again, the number of the conditional blocks in the third wake-up detection mode depends on the total number of the WUS instances in the sequence 600 of WUS instances, and may be more or fewer than that shown in Fig. 14.

It should be also apparent to those skilled in the art that each WUS instance may be encoded in any other manner, and the binary one and zero described above and used to indicate the presence and absence of the payload data are given only for explanatory purposes.

In general, the third wake-up detection mode can be summarized as follows. When all WUS instances of the sequence 600 of WUS instances are decoded correctly as the binary one, the user node 900 is in the active state when the network node 500 generates and transmits the probe data packet to the user node 900 after the complete transmission of the sequence 600 of WUS instances. Once the ACK message for the probe data packet is received by the network node 500, the payload data is transmitted from the network node 500 to the user node 900.

The third wake-up detection mode may reduce the false alarms but may at the same time increase the misdetection. The overall misdetection rate P_omd is equal to 1-(1-P_smd)^{b-size}, and the overall false alarm P_ofa is equal to P_sfa^{b_size}. For example, if P_smd and P sfa are equal to 0.01 and 0.1, respectively, and assuming that the b_size is equal to 5, P omd and P ofa will be equal to 0.049 and 10⁻⁵, respectively. As can be seen, the third wake-up detection mode increases the misdetection probability and reduces the false alarms, and hence is more appropriate for applications when the energy consumption is more important than the delay.

Table 1 given below provides some numerical results in terms of the overall false alarm rate and misdetection under the three wake-up detection modes. It is intended that the particular signal structure is characterized by the false alarm rate and misdetection rate of 0.1 and 0.01, respectively. As can be seen from the table, the second wake-up detection mode reduces both the error rates when the b-size increases.

**Table 1. The performance of the three wake-up detection modes as function of the b-size**

| b_size | | 1 | 3 | 5 | 7 | 9 | 11 |
|---|---|---|---|---|---|---|---|
| First wake-up detection mode | P_md | 1.0e-2 | 1.0e-6 | 1.0e-10 | 1.0e-14 | 1.0e-18 | 1.0e-22 |
| | P_fa | 0.1 | 0.271 | 0.4095 | 0.5217 | 0.6126 | 0.6862 |
| Second wake-up detection mode | P_md | 1.0e-2 | 2.9e-4 | 9.8e-6 | 3.4e-7 | 1.2e-8 | 4.4e-10 |
| | P_fa | 0.1 | 2.8e-2 | 8.6e-3 | 2.7e-3 | 8.9e-4 | 2.9e-4 |
| Third wake-up detection mode | P_md | 1.0e-2 | 0.0297 | 0.0490 | 0.0679 | 0.0865 | 0.1047 |
| | P_fa | 0.1 | 1.0e-3 | 1.0e-5 | 1.0e-7 | 1.0e-9 | 1.0e-11 |

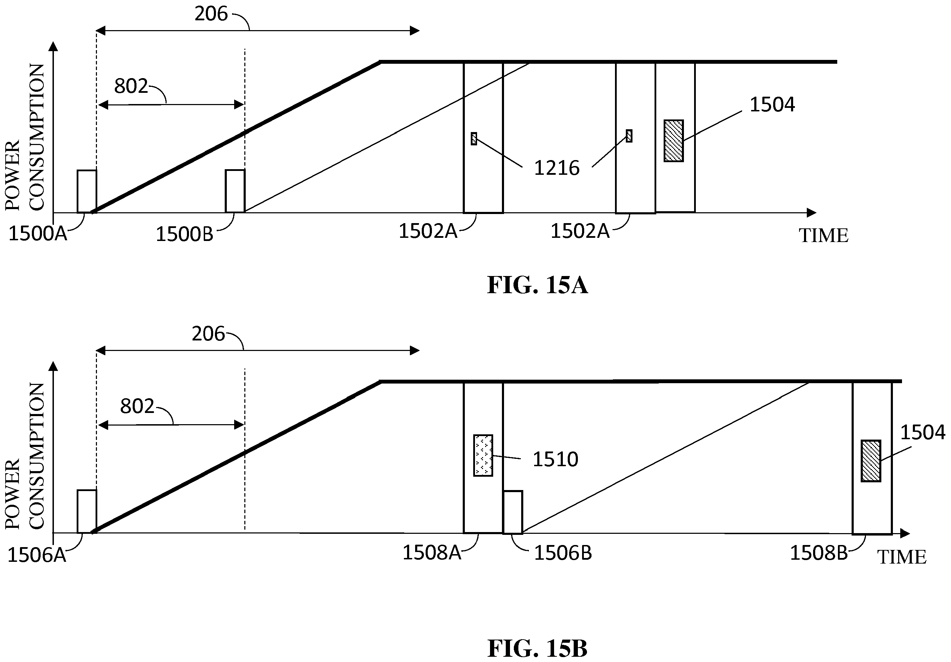

Figs. 15A-15B illustrate the advantages of the wake-up signaling based on the usage of the probe data packet over the conventional wake-up signaling. In particular, Fig. 15A shows the power consumption of the user node 900 when the first wake-up detection mode is applied or active. In this case, the sequence 600 of WUS instances comprises two WUS instances 1500A and 1500B, each of which is characterized by one of time slots 1502A and 1502B. More specifically, the time slot 1502A is allocated to the WUS instance 1500A, and the time slot 1502B is allocated to the WUS instance 1500B. If one of the WUS instances 1500A and 1500B is decoded correctly, a probe data packet 1216 can be transmitted and received in the corresponding time slot. Payload data 1504 is transmitted from the network node 500 to the user node 900 upon receiving the ACK message for the probe data packet 1216.

As for Fig. 15B, it shows the power consumption of the user node 900 in case of the conventional wake-up signaling. In particular, when a first WUS 1506A is transmitted, the network node 500 starts transmitting the payload data to the user node 900 in a time slot 1508A, without pre-using the probe data packet. If, for example, the user node 900 does not receive the payload data for any reason, the payload data becomes missing or lost 1510. The network node 500 then re-transmits the payload data after a second WUS 1506B in a time slot 1508B, and it is intended that the payload data 1504 are received this time. As can be seen, there is a time delay in receiving the payload data 1504, which may occur in the conventional wake-up signaling.

In one embodiment, the user node 900 is configured to activate a timer adjusted to a predefined number of wake-up cycles, a wake-up cycle being a time interval between first wake-up signal instances of two adjacent sequences 600 of wake-up signal instance, and when decoding all wake-up signal instances to be absent in all of the wake-up cycles during the timer, start decoding a downlink control channel.

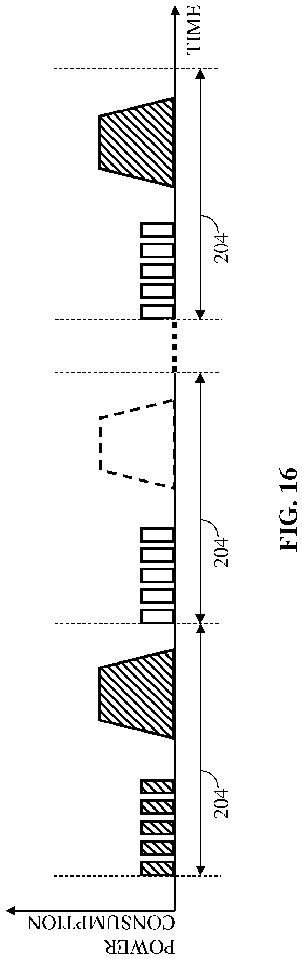

In one embodiment shown in Fig. 16 the user node 900 is provided with a wake-up timer (not shown) configured to count the number of the wake-up cycles 204 in which all WUS instances in two or more subsequent sequences 600 of WUS instances are decoded as the binary zero, i.e. incorrectly. When there are two or more such wake-up cycles 204 (starting from the second wake-up cycle in Fig. 15), the user node 900 may be configured to wake up, i.e. to turn on the BBU 908, and start processing the downlink data channel (see the last wake-up cycle in Fig. 16). The idea behind such waking up is that it also gives an opportunity for the user node 900 to estimate the downlink control/data channel and report the very recent channel estimate to the network node 500. This can prevent scenarios that previous channel estimates are not valid anymore. The wake-up timer can be configured based on an average speed of the user node 900 or channel conditions. Additionally, the wake-up timer can be configured in such a way as to minimize the power consumption of the user node 900, without scarifying the quality of service (QoS) due to the absence of the recent channel estimate. This approach can be extremely important for user nodes moving near cell edges, where the user nodes may change cells any time.

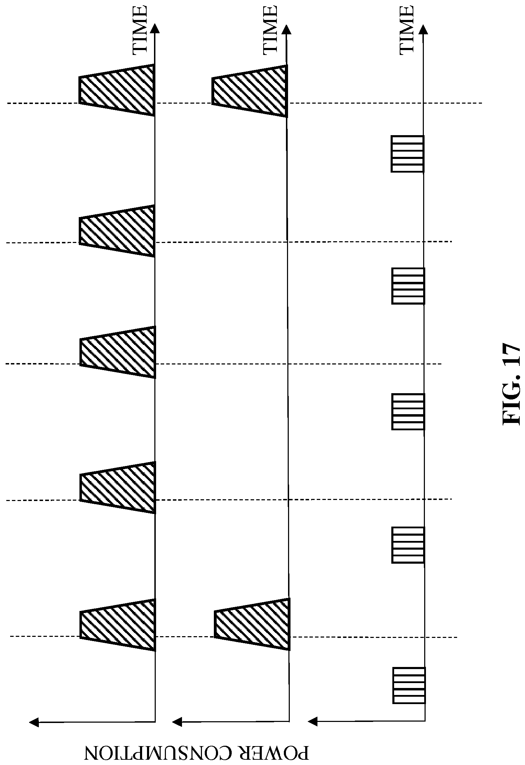

It should be also noted that the c-DRX mechanism requires reconfiguration per traffic type, and it may degrade the QoS or increase the power consumption if its parameters are not optimized. For instance, the DRX cycle 102 as the main DRX parameter for voice is 20 ms and for video is 120 ms. The c-DRX mechanism works very well with periodical traffics, however it cannot work efficiently for non-periodical traffic, such as in augmented reality (AR) or virtual reality (VR) applications. However, the wake-up signaling according to the invention eliminates the need for the reconfiguration of wake-up parameters for broader traffic. The wake-up signaling works well with non-periodical traffics. In Fig. 17, the first and second (from above) time dependencies of the power consumption of the user node 900 show the c-DRX mechanism for cases with a one-DRX cycle and four-DRX cycle length, respectively. For each of the cases, the network node 500 and the user node 900 need to exchange the corresponding configurations. However, as for the wake-up signaling according to the present disclosure, which is shown in the third (bottom) time dependency of the power consumption, it can be applied in both of the cases equally, thereby reducing the power consumption (since there is no need to perform any reconfiguration) and latency.

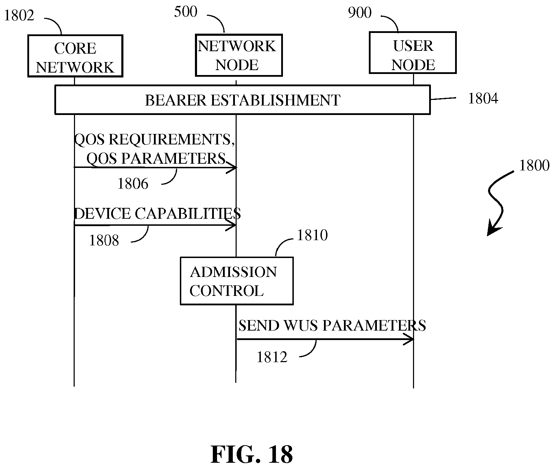

Fig. 18 shows a signal flow diagram explaining a process 1800 of allocating WUS parameters to the user node 900. In general, there are three parties to be involved in the process 1800, namely: a core network 1802 (which is one example of the communication network), the network node 500 and the user node 900. All of the parties communicate with each other through a bearer 1804 (such as the downlink control channel, for example). At first, the core network 1802 communicates 1806, 1808 QoS requirements, QoS parameters and device capabilities to the network node 500. After that, the network node 500 performs 1810 admission control by estimating required sensitivity and resources for providing the acceptable QoS. Once the admission control is complete, the network node 500 sends 1812 the WUS parameters to the user node 900 to configure the wake-up receiver 906 of the user node 900 based thereon.

In one embodiment, the network node 500 is configured to send the WUS parameters including at least one of the following to the user node 900: a number (b_size) of the WUS instances in the sequence 600 of WUS instances; an inner time period 602 between two subsequent WUS instances in the sequence 600 of WUS instances; a total bandwidth used for the WUS instances in the sequence 600 of WUS instances; a total number of the frequency channels used for the frequency hopping pattern; and the frequency hopping pattern; and a maximum number of the sequences 600 of WUS instances with the constant b_size.

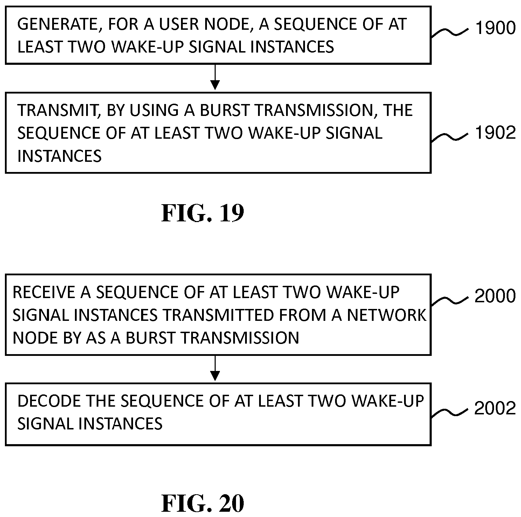

FIG. 19 illustrates a flowchart of method of operating a network node according to an aspect. The method comprises generating 1900, for a user node 900, a sequence 600 of at least two wake-up signal instances; and transmitting 1902, by using a burst transmission, the sequence 600 of at least two wake-up signal instances. The method illustrated in FIG. 19 may be implemented by the network node 500 discussed in more detail with reference to FIG. 5. Further, the network node 500 may comprise a memory or memories storing at least one computer program comprising instructions that when executed by a processing unit or processor, cause the network node 500 to perform the method.

FIG. 20 illustrates a flowchart of method of operating a user node according to an aspect. The method comprises receiving 2000 a sequence 600 of at least two wake-up signal instances transmitted as a burst transmission from a network node 500; and decoding 2002 the sequence 600 of at least two wake-up signal instances. The method illustrated in FIG. 20 may be implemented by the user node 900 discussed in more detail with reference to FIG. 9. Further, the user node 900 may comprise a memory or memories storing at least one computer program comprising instructions that when executed by a processing unit or processor, cause the user node 900 to perform the method.

The functionality described herein can be performed, at least in part, by one or more computer program product components such as software components. According to an example, the user node 900 and/or the network node 500 may comprise a processor configured by the program code when executed to execute the examples and embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), Graphics Processing Units (GPUs).

The functionality of the user node 900 and/or the network node 500 may be implemented by program instructions stored on a computer readable medium. The program instructions, when executed, cause the computer, processor or the like, to perform the steps of the encoding and/or decoding methods. The computer readable medium can be any medium, including non-transitory storage media, on which the program is stored such as a Blu-Ray disc, DVD, CD, USB (flash) drive, hard disc, server storage available via a network, a ROM, a PROM, an EPROM, an EEPROM or a Flash memory having electronically readable control signals stored thereon which cooperate or are capable of cooperating with a programmable computer system such that an embodiment of at least one of the inventive methods is performed. An embodiment of the invention comprises or is a computer program comprising program code for performing any of the methods described herein, when executed on a computer. Another example of the invention comprises or is a computer readable medium comprising a program code that, when executed by a processor, causes a computer system to perform any of the methods described herein.

Although the subject matter has been described in language specific to structural features and/or acts, it is to be understood that the subject matter defined in the appended claims is not necessarily limited to the specific features or acts described above.

It will be understood that the benefits and advantages described above may relate to one example or may relate to several examples. The examples are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Aspects of any of the examples described above may be combined with aspects of any of the other examples described to form further examples without losing the effect sought.

The term 'comprising' is used herein to mean including the method, blocks or elements identified, but that such blocks or elements do not comprise an exclusive list and a method or apparatus may contain additional blocks or elements. Although the invention and its advantages have been described in detail with reference to specific features and embodiments thereof, it is evident that various changes, modifications, substitutions, combinations and alterations can be made thereto without departing from the scope of the invention as defined by the appended claims. The specification and drawings are, accordingly, to be regarded simply as an illustration of the invention as defined by the appended claims, and are contemplated to cover any and all modifications, variations, or combinations that fall within the scope of the invention.

## Claims

1. A method of operating a network node (500), the method comprising:
generating, for a user node (900), a sequence (600) of at least two wake-up signal instances; and
transmitting, as a burst transmission, the sequence (600) of at least two wake-up signal instances,
**characterized by** the method comprising:
transmitting the sequence (600) of at least two wake-up signal instances by using a frequency hopping pattern defining a frequency channel from an available set of frequency channels for each of the at least two wake-up signal instances.

2. The method of claim 1, wherein the burst transmission comprises at least two transmissions in a short time interval, and wherein each transmission of the at least two transmissions comprises a different wake-up signal instance of the sequence (600) of at least two wake-up signal instances.

3. The method of claim 1 or 2, wherein the at least two wake-up signal instances in the sequence (600) of at least two wake-up signal instances comprises repetitive wake-up signal instances spaced substantially equally in time.

4. The method of any of claims 1 - 3, wherein the method comprising:
generating a probe data packet (1216);
transmitting the probe data packet (1216) to the user node (900) after transmitting the last wake-up signal instance of the sequence (600) of at least two wake-up signal instances; and
when receiving an acknowledgement (1218) to the probe data packet (1216), transmitting payload data (1506) to the user node (900).

5. The method of any of claims 1 - 4, wherein the method comprising:
transmitting each wake-up signal instance within the sequence (600) of at least two wake-up signal instances using a different beam.

6. A method of operating a user node (900), the method comprising:
receiving a sequence (600) of at least two wake-up signal instances transmitted as a burst transmission from a network node (500); and
decoding the sequence (600) of at least two wake-up signal instances,
**characterized by** the method comprising:
receiving from the network node (500) a frequency hopping pattern used to transmit the sequence (600) of at least two wake-up signal instances, the frequency hopping pattern defining a frequency channel from an available set of frequency channels for each of the wake-up signal instances; and
switching among the frequency channels according to the frequency hopping pattern to receive the sequence (600) of at least two wake-up signal instances.

7. The method of claim 6, wherein the burst transmission comprises at least two transmissions in a short time interval, and wherein each transmission of the at least two transmissions comprises a different wake-up signal instance of the sequence (600) of at least two wake-up signal instances.

8. The method of claim 6 or 7, wherein the sequence (600) of at least two wake-up signal instances comprises repetitive wake-up signal instances (804) spaced substantially equally in time.

9. The method of any of claims 6 - 8, wherein the method comprising:
activating a timer adjusted to a predefined number of wake-up cycles, a wake-up cycle being a time interval between first wake-up signal instances of two adjacent sequences (600) of wake-up signal instances; and
when decoding all wake-up signal instances to be absent in all of the wake-up cycles during the timer, starting decoding a downlink control channel.

10. A network node (500), configured to perform the method of any of claims 1 - 5.

11. A user node (900) configured to perform the method of any of claims 6 - 9.

12. A communications system, comprising the network node (500) of claim 10 and the user node (900) of claim 11.

13. A computer readable medium, comprising a program code, when executed by a processor, causes a computer system to perform the method of any of claims 1-5 or the method of claims 6-9.

## Patentansprüche

1. Verfahren zum Betreiben eines Netzwerkknotens (500), wobei das Verfahren Folgendes umfasst:
Erzeugen einer Sequenz (600) von mindestens zwei Wecksignalinstanzen für einen Benutzerknoten (900) und
Übertragen der Sequenz (600) von mindestens zwei Wecksignalinstanzen als eine Burstübertragung,
**dadurch gekennzeichnet, dass** das Verfahren Folgendes umfasst:
Übertragen der Sequenz (600) von mindestens zwei Wecksignalinstanzen unter Verwendung eines Frequenzsprungmusters, das einen Frequenzkanal aus einem verfügbaren Satz von Frequenzkanälen für jede der mindestens zwei Wecksignalinstanzen definiert.

2. Verfahren nach Anspruch 1, wobei die Burstübertragung mindestens zwei Übertragungen in einem kurzen Zeitintervall umfasst und wobei jede Übertragung der mindestens zwei Übertragungen eine andere Wecksignalinstanz der Sequenz (600) von mindestens zwei Wecksignalinstanzen umfasst.

3. Verfahren nach Anspruch 1 oder 2, wobei die mindestens zwei Wecksignalinstanzen in der Sequenz (600) von mindestens zwei Wecksignalinstanzen in der Zeit im Wesentlichen gleich beabstandete sich wiederholende Wecksignalinstanzen umfassen.

4. Verfahren nach einem der Ansprüche 1-3, wobei das Verfahren Folgendes umfasst:
Erzeugen eines Sondendatenpakets (1216);
Übertragen des Sondendatenpakets (1216) zum Benutzerknoten (900) nach Übertragen der letzten Wecksignalinstanz der Sequenz (600) von mindestens zwei Wecksignalinstanzen und
Übertragen von Nutzdaten (1506) zum Benutzerknoten (900), wenn eine Bestätigung (1218) für das Sondendatenpaket (1216) empfangen wird.

5. Verfahren nach einem der Ansprüche 1-4, wobei das Verfahren Folgendes umfasst:
Übertragen jeder Wecksignalinstanz in der Sequenz (600) von mindestens zwei Wecksignalinstanzen unter Verwendung eines anderen Strahls.

6. Verfahren zum Betreiben eines Benutzerknotens (900), wobei das Verfahren Folgendes umfasst:
Empfangen einer Sequenz (600) von mindestens zwei Wecksignalinstanzen, die als eine Burstübertragung von einem Netzwerkknoten (500) übertragen werden; und
Decodieren der Sequenz (600) von mindestens zwei Wecksignalinstanzen,
**dadurch gekennzeichnet, dass** das Verfahren Folgendes umfasst:
Empfangen eines Frequenzsprungmusters, das zum Übertragen der Sequenz (600) von mindestens zwei Wecksignalinstanzen verwendet wird, vom Netzwerkknoten (500), wobei das Frequenzsprungmuster einen Frequenzkanal aus einem verfügbaren Satz von Frequenzkanälen für jede der Wecksignalinstanzen definiert; und
Umschalten zwischen den Frequenzkanälen gemäß dem Frequenzsprungmuster, um die Sequenz (600) von mindestens zwei Wecksignalinstanzen zu empfangen.

7. Verfahren nach Anspruch 6, wobei die Burstübertragung mindestens zwei Übertragungen in einem kurzen Zeitintervall umfasst und wobei jede Übertragung der mindestens zwei Übertragungen eine andere Wecksignalinstanz der Sequenz (600) von mindestens zwei Wecksignalinstanzen umfasst.

8. Verfahren nach Anspruch 6 oder 7, wobei die Sequenz (600) von mindestens zwei Wecksignalinstanzen in der Zeit im Wesentlichen gleich beabstandete sich wiederholende Wecksignalinstanzen (804) umfasst.

9. Verfahren nach einem der Ansprüche 6-8, wobei das Verfahren Folgendes umfasst:
Aktivieren eines Timers, der auf eine vordefinierte Anzahl von Weckzyklen eingestellt ist, wobei ein Weckzyklus ein Zeitintervall zwischen ersten Wecksignalinstanzen von zwei benachbarten Sequenzen (600) von Wecksignalinstanzen ist; und
Starten des Decodierens eines Downlinksteuerkanals, wenn alle Wecksignalinstanzen derart decodiert werden, dass sie während des Timers in allen Weckzyklen fehlen.

10. Netzwerkknoten (500), der dazu ausgelegt ist, das Verfahren nach einem der Ansprüche 1-5 durchzuführen.

11. Benutzerknoten (900), der dazu ausgelegt ist, das Verfahren nach einem der Ansprüche 6-9 durchzuführen.

12. Kommunikationssystem, das den Netzwerkknoten (500) nach Anspruch 10 und den Benutzerknoten (900) nach Anspruch 11 umfasst.

13. Computerlesbares Medium, das einen Programmcode umfasst, der, wenn von einem Prozessor ausgeführt, ein Computersystem veranlasst, das Verfahren nach einem der Ansprüche 1-5 oder das Verfahren nach den Ansprüchen 6-9 durchzuführen.

## Revendications

1. Procédé de fonctionnement d'un nœud de réseau (500), le procédé comprenant les étapes consistant à :
générer, pour un nœud d'utilisateur (900), une séquence (600) d'au moins deux instances de signal de réveil ; et
transmettre, comme transmission par rafales, la séquence (600) d'au moins deux instances de signal de réveil,
**caractérisé en ce que** le procédé comprend l'étape consistant à :
transmettre la séquence (600) d'au moins deux instances de signal de réveil au moyen d'un modèle de saut de fréquence définissant un canal de fréquence parmi un ensemble disponible de canaux de fréquence pour chacune des au moins deux instances de signal de réveil.

2. Procédé selon la revendication 1, dans lequel la transmission par rafales comprend au moins deux transmissions dans un court intervalle de temps, et dans lequel chaque transmission des au moins deux transmissions comprend une instance de signal de réveil différente de la séquence (600) d'au moins deux instances de signal de réveil.

3. Procédé selon la revendication 1 ou 2, dans lequel les au moins deux instances de signal de réveil dans la séquence (600) d'au moins deux instances de signal de réveil comprennent des instances de signal de réveil répétitives espacées de manière sensiblement égale dans le temps.

4. Procédé selon l'une quelconque des revendications 1 à 3, le procédé comprenant les étapes consistant à :
générer un paquet de données de sondage (1216) ;
transmettre le paquet de données de sondage (1216) au nœud d'utilisateur (900) après la transmission de la dernière instance de signal de réveil de la séquence (600) d'au moins deux instances de signal de réveil ; et
lors de la réception d'un accusé de réception (1218) du paquet de données de sondage (1216), transmettre des données de charge utile (1506) au nœud d'utilisateur (900).

5. Procédé selon l'une quelconque des revendications 1 à 4, le procédé comprenant l'étape consistant à :
transmettre chaque instance de signal de réveil dans la séquence (600) d'au moins deux instances de signal de réveil au moyen d'un faisceau différent.

6. Procédé de fonctionnement d'un nœud d'utilisateur (900), le procédé comprenant les étapes consistant à :
recevoir une séquence (600) d'au moins deux instances de signal de réveil transmises comme transmission par rafales depuis un nœud de réseau (500) ; et
décoder la séquence (600) d'au moins deux instances de signal de réveil,
**caractérisé en ce que** le procédé comprend les étapes consistant à :
recevoir, en provenance du nœud de réseau (500), un modèle de saut de fréquence utilisé pour transmettre la séquence (600) d'au moins deux instances de signal de réveil, le modèle de saut de fréquence définissant un canal de fréquence parmi un ensemble disponible de canaux de fréquence pour chacune des instances de signal de réveil. et
commuter parmi les canaux de fréquence selon le modèle de saut de fréquence pour recevoir la séquence (600) d'au moins deux instances de signal de réveil.

7. Procédé selon la revendication 6, dans lequel la transmission par rafales comprend au moins deux transmissions dans un court intervalle de temps, et dans lequel chaque transmission des au moins deux transmissions comprend une instance de signal de réveil différente de la séquence (600) d'au moins deux instances de signal de réveil.

8. Procédé selon la revendication 6 ou 7, dans lequel la séquence (600) d'au moins deux instances de signal de réveil comprend des instances de signal de réveil répétitives (804) espacées de manière sensiblement égale dans le temps.

9. Procédé selon l'une quelconque des revendications 6 à 8, le procédé comprenant les étapes consistant à :
activer une temporisation réglée sur un nombre prédéfini de cycles de réveil, un cycle de réveil étant un intervalle de temps entre des premières instances de signal de réveil de deux séquences adjacentes (600) d'instances de signal de réveil ; et
lors du décodage de toutes les instances de signal de réveil pour qu'elles soient absentes dans tous les cycles de réveil pendant la temporisation, démarrer le décodage d'un canal de commande en liaison descendante.

10. Nœud de réseau (500), configuré pour réaliser le procédé selon l'une quelconque des revendications 1 à 5.

11. Nœud d'utilisateur (900), configuré pour réaliser le procédé selon l'une quelconque des revendications 6 à 9.

12. Système de communication, comprenant le nœud de réseau (500) selon la revendication 10 et le nœud d'utilisateur (900) selon la revendication 11.

13. Support lisible par ordinateur, comprenant un code de programme qui, lorsqu'il est exécuté par un processeur, amène un système informatique à réaliser le procédé selon l'une quelconque des revendications 1 à 5 ou le procédé selon les revendications 6 à 9.
